(19) Europäisches Patentamt

European Patent Office

Office européen des brevets

(11) Veröffentlichungsnummer: **0 103 195**
A1

## (12) EUROPÄISCHE PATENTANMELDUNG

(21) Anmeldenummer: 83108055.1

(22) Anmeldetag: 16.08.83

(51) Int. Cl.³: **C 04 B 31/04,** C 04 B 31/36,
B 28 B 1/52

(30) Priorität: 13.09.82 DE 3233873
08.03.83 DE 3308124

(43) Veröffentlichungstag der Anmeldung: 21.03.84
Patentblatt 84/12

(84) Benannte Vertragsstaaten: **AT BE CH DE FR GB IT LI LU
NL SE**

(71) Anmelder: **Arheider, Karl-Heinz, Sechsheidener
Strasse 88a, D-6342 Haiger 2 - Sechsheiden (DE)**

(72) Erfinder: **Arheider, Karl-Heinz, Sechsheidener
Strasse 88a, D-6342 Haiger 2 - Sechsheiden (DE)**

(74) Vertreter: **Thielmann, Paul, Dipl.-Landw., Am
Eschenberg 14, D-3560 Biedenkopf (DE)**

(54) Stoffgemisch mit zementgebundenem Fasermaterial und Verfahren zu dessen Herstellung und Verarbeitung.

(57) Die Erfindung betrifft ein Stoffgemisch für einen nach Zugabe von Wasser in pastösem bis fließfähigem Zustand formbaren und danach aushärtenden Werkstoff mit zement- oder gipsgebundenem Fasermaterial.

Nach der Erfindung enthält das Stoffgemisch wenigstens folgende Bestandteile:

a) Organische Bindemittel enthaltendes organisches Fasermaterial, vorzugsweise Altpapier, 10 bis 70%;

b) aus einer Mineralschmelze gewonnenes Fasermaterial (Steinwolle) und/oder Faserstaub, 5 bis 30%;

c) Zement und/oder Gips 10 bis 60%;

d) Quarzsand feinster Körnung, 5 bis 50%.

Die Erfindung betrifft ferner ein Verfahren zum Herstellen eines solchen Stoffgemisches. Dieses ist dadurch gekennzeichnet, daß man jeweils nach dem vorgesehenen Mengenverhältnis eine bestimmte Menge von vorzerkleinertem Altpapier und eine bestimmte Menge Steinwolle in einer geeigneten Vorrichtung fein. zerkleinert und eine bestimmte Menge der so gewonnenen feinfasrigen Masse gemäß dem vorgesehenen Mengenverhältnis mit einer bestimmten Menge Zement und Quarzsand sowie gegebenenfalls weiteren Zuschlagstoffen in einer geeigneten Vorrichtung innig miteinander mischt.

Ein solches Stoffgemisch kann nach Zugabe von Wasser in an sich bekannter Weise zu Formkörpern oder Spritz- bzw. Aufstreich-Beschichtungen verarbeitet werden.

ACTORUM AG

PATENTINGENIEUR
Dipl.-Landw. P. Thielmann
*European Patent Attorney*

Am Eschenberg 14 · Tel. (06461) 2733
D-3560 BIEDENKOPF/LAHN

ANMELDER

Arhelger, Karl-Heinz, Sechsheldener Straße 88a,
D-6342 Haiger 2 - Sechshelden

---

TITELBEZEICHNUNG

Stoffgemisch mit zementgebundenem Fasermaterial und Verfahren zu dessen Herstellung und Verarbeitung

---

BESCHREIBUNG

Die Erfindung betrifft ein Stoffgemisch für einen nach Zusatz von Wasser in pastösem bis fließfähigem Zustand formbaren und danach aushärtenden Werkstoff mit zementgebundenem Fasermaterial.

Die Erfindung betrifft ferner ein Verfahren zur Herstellung des erfindungsgemäßen Stoffgemisches sowie dessen Verarbeitung.

Es sind bereits Werkstoffe und Formkörper aus zementgebundenem Fasermaterial bekannt. Einer der bekanntesten unter ihnen ist der Asbestzement. Dabei handelt es sich um einen mineralischen Werkstoff, in dem zerfaserter Asbest in Zement gebunden ist. Dieser Werkstoff zeichnet sich durch eine Reihe von Vorteilen aus, die ihm eine große Verbreitung verschafft haben:

Er ist nicht brennbar. Erzeugnisse daraus haben eine
verhältnismäßig gute Festigkeit und sind hinsichtlich
ihrer Witterungsbeständigkeit und ihrer Beständigkeit
gegenüber chemischen Einflüssen vergleichbar mit Beton.
Dieser Werkstoff ist auch in sehr mannigfaltiger Weise
formbar, beispielsweise zu schieferähnlichen Platten
für Bauzwecke, zu größeren Tafeln, die im Querschnitt
profiliert sein können , zu Gefäßen und anderem mehr.
In fließfähigem Zustand und nach dem Verarbeiten aushärtend kann er auch zur Spritz- oder Aufstreichbeschichtung von Wänden, Behältern, Rohren und anderem
verwendet werden.

Allerdings ist hier die Einschränkung zu machen, daß die
Tafeln und Platten aus Asbestzement unter Hitzeeinwirkung mit sehr großer Energie zerspringen, so daß nicht
nur die damit abgedeckten Flächen keinen Feuerschutz
mehr haben; die umherfliegenden heißen Plattenstücke
sind auch darüber hinaus eine große Gefahr, z.B. für
Löschmannschaften bei einer Brandbekämpfung.

Es ist inzwischen auch bekannt geworden, daß Asbest
Nachteile hat, die so erheblich sind, daß die Einstellung seiner Verarbeitung in weiten Bereichen angestrebt
wird. Asbestfasern gefährden nicht nur in hohem Maße die
Gesundheit derjenigen Menschen, die mit der Verarbeitung
unmittelbar befaßt sind, was besonders auf die Spritzbeschichtung zutrifft. Auch in der Umgebung der Gewinnungs- und Verarbeitungsstätten ist die Gesundheit von
Menschen und Tieren gefährdet.
Beim Verschleiß von Gegenständen aus diesem Werkstoff
werden die sehr beständigen Asbestfasern freigesetzt,
so daß Gesundheitsschäden nicht nur im Bereich der Herstellung und Verarbeitung, sondern auch im Bereich der
Anwendung von Asbestzement festzustellen sind.

Es gilt als gesicherte Erkenntnis, daß im menschlichen oder tierischen Körper, insbesondere in den Lungen festgesetzte Asbestfasern diese zerstören. Darüber hinaus können sie Krebserkrankungen hervorrufen.

Indessen gibt es auch bereits Werkstoffe auf der Basis von zementgebundenem organischem Fasermaterial, nämlich Holzwolle. Die Formgebung dieses Materials beschränkt sich jedoch praktisch auf die Herstellung von Platten für Bauzwecke. Solche Platten sind nur in Verbindung mit anderen Baumaterialien verwendbar, so z.B. als wärmedämmender Putzträger an Wänden und Decken. Sie sind nicht feuerfest und auch empfindlich gegenüber Nässe. Sie stellen keinesfalls eine Alternative zu Asbestzementplatten dar.

Der Erfindung liegt daher die Aufgabe zugrunde, ein Stoffgemisch für einen Werkstoff zu schaffen, der nicht nur in vollem Umfang der Anwendbarkeit eine Alternative zum Asbestzement darstellt. Das Stoffgemisch soll nach Zugabe von Wasser bis zur Knetfähigkeit bzw. Fließfähigkeit in bekannter Weise durch Gießen, Auswalzen und/oder Pressen oder auch im Spritzbzw. Aufstreichverfahren formbar sein, wobei nach der Formgebung eine betonartige Aushärtung erfolgt. Insbesondere soll das neue Stoffgemisch die gesundheitsschädlichen Wirkungen der Asbestfasern nicht haben. Darüber hinaus werden bessere technische Eigenschaften der herzustellenden Gegenstände angestrebt, z.B. höhere Wärmedämmfähigkeit und höhere Bruchfestigkeit als bei Asbestzement-Erzeugnissen.

Aus diesem Stoffgemisch hergestellte Tafeln für Bauzwecke sollen nicht unter Hitzeeinwirkung zerspringen, wie das bei Asbestzement-Tafeln der Fall ist.

Ein wesentliches Aufgabenziel ist die Einbeziehung von Altstoffen, namentlich Altpapier und dergleichen Fasern enthaltendes Material in die Herstellung hochwertiger Werkstoffe.

Der Erfindung liegt ferner die Aufgabe zugrunde, ein wirtschaftliches Verfahren zur Herstellung des erfindungsgemäßen Stoffgemisches und dessen Verarbeitung zu hochwertigen Endprodukten aufzuzeigen.

Zur Lösung dieser Aufgabe geht die Erfindung zunächst aus von einem Stoffgemisch für einen nach Zugabe von Wasser in pastösem bis fließfähigem Zustand formbaren und danach aushärtenden Werkstoff mit zementgebundenem Fasermaterial.

Die gestellte Aufgabe wird hinsichtlich der Zusammensetzung des Stoffgemisches erfindungsgemäß dadurch gelöst, daß dieses wenigstens folgende Bestandteile enthält:

a) Organische Bindemittel enthaltendes organisches Fasermaterial,

b) aus einer Mineralschmelze gewonnenes Fasermaterial wie Steinwolle und Faserstaub,

c) Zement und/oder Gips,

d) Quarzsand feinster Körnung oder dergleichen körniges mineralisches Material.

Die Mengenanteile der Bestandteile des Stoffgemisches sind jeweils innerhalb weiter Grenzen veränderbar. Die Anteile aus organische Bindemittel enthaltendem organischem Fasermaterial können 10 bis 70 %, die Anteile aus mineralischem Fasermaterial 5 bis 30 %, die Anteile Zement und/oder Gips 10 bis 60 %, die Anteile Quarzsand oder dergleichen körniges Material 5 bis 50 % betragen.

5

Als Ausgangsmaterial für das organische Bindemittel
enthaltende organische Fasermaterial wird Altpapier bevorzugt, in dem Harzleim oder dergleichen organische
Bindemittel enthalten sind. Es hat sich gezeigt, daß
zerfasertes Altpapier einen hochwertigen gesundheitlich unbedenklichen Bestandteil eines Stoffgemisches
für hochwertige Werkstoffe mit insbesondere sehr guten
Wärmedämmwerten sein kann.

Es kann aber auch organisches Fasermaterial verwendet
werden, welches bei der Papierherstellung als Zwischenprodukt anfällt, z.B. Zellulose mit organischen Bindemitteln wie Harzleim.

Das erfindungsgemäße Stoffgemisch kann auch zusätzlich
Textilfasern enthalten, die ebenfalls aus Altmaterial
gewonnen werden können.

Entsprechend der gewünschten Härte der herzustellenden
Gegenstände kann nach einem weiteren Merkmal der Erfindung das Stoffgemisch mehr oder weniger Quarzsand oder
dergleichen mineralische Zuschlagstoffe, vorzugsweise in
feinster Körnung enthalten.

In einer beispielhaften, für mancherlei Zwecke geeigneten Zusammensetzung enthält das Stoffgemisch nach Gewichtsanteilen folgende Zusammensetzung:

        40 % Altpapier,
        10 % aus einer Mineralschmelze gewonnenes Fasermaterial wie Steinwolle und Faserstaub,
        30 % Zement,
        20 % Quarzsand feinster Körnung.

Hinsichtlich des Verfahrens zur Herstellung des erfindungsgemäßen Stoffgemisches wird die der Erfindung zugrundeliegende Aufgabe dadurch gelöst, daß man

6

a) zunächst gemeinsam die vorgesehene Menge des aus einer Mineralschmelze gewonnenen Fasermaterials nebst Faserstaubes und die ein Mehrfaches betragende Menge des ein organisches Bindemittel enthaltenden organischen Fasermaterials, vorzugsweise vorzerkleinerten Altpapiers, in einer geeigneten Vorrichtung, beispielsweise in einer Schlagkreuzmühle fein zerkleinert und dann

b) eine bestimmte Menge der so gewonnenen aus mineralischen und organischen Bestandteilen bestehenden feinfasrigen Teilmischung mit anteilsmäßig bestimmten Mengen von Zement und anderen Zuschlagstoffen wie Quarzsand feinster Körnung in einer geeigneten Vorrichtung innig miteinander vermischt.

Für die Verarbeitung erfindungsgemäßer Stoffgemische zu Formkörpern geht die Erfindung aus von einem aus der Asbestzement-Verarbeitung bekannten Verfahren, wobei aus einem Stoffgemisch nach Zugabe von Wasser zunächst eine sogenannte Weichpappe hergestellt und diese dann unter hohem Druck zu einem Formkörper gepreßt wird.

Sehr mannigfaltig verwendbare Werkstofformen und Formkörper aus einem erfindungsgemäßen Stoffgemisch sind insbesondere Tafeln in verschiedenen Maßen und Qualitäten. In einfacher Ausführung hat eine solche Tafel eine homogene Materialbeschaffenheit.
Die Erfindung umfaßt aber auch Formkörper mit heterogener Materialbeschaffenheit, z.B. Tafeln, die wenigstens auf einer Außenseite eine andere Materialzusammensetzung haben als im Inneren. Eine oder beide Außenschichten können beispielweise durch einen höheren Anteil an Quarzsand und/oder einen größeren Anteil Zement

7

eine größere Härte mechanische Belastbarkeit und Widerstandsfähigkeit gegenüber chemischen Einflüssen haben, als das Tafelinnere.

Zur Erzielung einer größeren Wärmedämmfähigkeit kann im Tafelinneren der Anteil an Fasermaterial größer sein. Verfahrenstechnisch sieht hierzu die Erfindung vor, daß mehrere Weichpappen aus verschiedenen Stoffgemischen der erfindungsgemäßen Art zu einem Schichtkörper gepreßt werden.

Die Formgebung eines erfindungsgemäßen Stoffgemisches ist nicht beschränkt auf Werkstofftafeln oder plattenartige Fertigerzeugnisse. Sie umfaßt auch andere Formkörper, sofern deren Formgebung aus einer pastösen oder fließfähigen Masse möglich ist. Dazu gehören auch verfahrenstechnisch an sich bekannte Spritz- oder Aufstreichbeschichtungen insbesondere zur Wärmeisolierung von Wänden, Behältern, Rohren und anderem.

PATENTINGENIEUR
Dipl.-Landw. P. Thielmann
European Patent Attorney

Am Eschenberg 14 · Tel. (06461) 2733
D-3560 BIEDENKOPF/LAHN

0103195

8

PATENTANSPRÜCHE

1. Stoffgemisch für einen nach Zugabe von Wasser in pastösem bis fließfähigem Zustand formbaren und danach aushärtenden Werkstoff mit zement- oder gipsgebundenem Fasermaterial, d a d u r c h   g e k e n n - z e i c h n e t ,   daß es wenigstens folgende Bestandteile enthält:

a) Organische Bindemittel enthaltendes organisches Fasermaterial,

b) aus einer Mineralschmelze gewonnenes Fasermaterial und/oder Faserstaub,

c) Zement und/oder Gips,

d) Quarzsand feinster Körnung oder dergleichen Material.

2. Stoffgemisch nach Anspruch 1,   d a d u r c h   g e - k e n n z e i c h n e t ,   daß die Anteilsmengen seiner Bestandteile innerhalb weiter Grenzen verschieden sein können, nämlich

a) organische Bindemittel enthaltendes organisches Fasermaterial 10 bis 70 %,

b) aus einer Mineralschmelze gewonnenes Fasermaterial und/oder Faserstaub 5 bis 30 %,

c) Zement und/oder Gips 10 bis 60 %,

d) Quarzsand feinster Körnung oder dergleichen Material 5 bis 50 %.

3. Stoffgemisch nach den Ansprüchen 1 und 2, d a - d u r c h  g e k e n n z e i c h n e t , daß das organische Bindemittel enthaltende organische Fasermaterial aus zerfasertem Papier, vorzugsweise Altpapier besteht.

4. Stoffgemisch nach den Ansprüchen 1 und 2, d a - d u r c h  g e k e n n z e i c h n e t , daß das organische Bindemittel enthaltende organische Fasermaterial Harzleim enthaltender Zellstoff ist.

5. Stoffgemisch nach den Ansprüchen 1 bis 4, d a - d u r c h  g e k e n n z e i c h n e t , daß es Textilfasern enthält.

6. Stoffgemisch nach den Ansprüchen 1 bis 5, d a - d u r c h  g e k e n n z e i c h n e t , daß es wenigstens einen Farbstoff enthält.

7. Stoffgemisch nach Anspruch 1 , g e k e n n - z e i c h n e t  d u r c h  folgende bevorzugte Anteilsmengen seiner Bestandteile:
   a) 40 % zerfasertes Altpapier,
   b) 10 % aus einer Mineralschmelze gewonnenes Fasermaterial und Faserstaub,
   c) 30 % Zement,
   d) 20 % Quarzsand feinster Körnung.

8. Verfahren zum Herstellen eines Stoffgemisches nach den Ansprüchen 1 bis 7, d a d u r c h  g e - k e n n z e i c h n e t , daß man
   a) eine nach dem vorgesehenen Mischungsverhältnis bestimmte Menge von zerkleinertem Papier oder der-gleichen Material, vorzugsweise Altpapier, ge-meinsam mit einer bestimmten Menge mineralischem

10

Fasermaterial und/oder Faserstaub in einer geeigneten Vorrichtung, vorzugsweise einer Schlagkreuzmühle fein zerkleinert und

b) eine nach dem vorgesehenen Mischungsverhältnis bestimmte Menge der so gewonnenen feinfasrigen Masse mit einer bestimmten Menge Zement und Quarzsand sowie gegebenenfalls weiteren Zuschlagstoffen in einer geeigneten Vorrichtung innig miteinander mischt.

9. Formkörper aus einem Stoffgemisch nach den Ansprüchen 1 bis 7, dadurch gekennzeichnet , daß seine stoffliche Zusammensetzung heterogen ist, derart, daß wenigstens eine Außenschicht einen höheren Anteil an Quarzsand und/oder Zement enthält, als das Innere des Formkörpers, wobei die verschiedenen Schichten ineinander übergehen.

10. Formkörper aus einem Stoffgemisch nach den Ansprüchen 1 bis 7, dadurch gekennzeichnet , daß seine stoffliche Zusammensetzung heterogen ist, derart, daß wenigstens eine Außenschicht eine Beimischung von Farbstoffen enthält.

11. Formkörper aus einem Stoffgemisch nach den Ansprüchen 1 bis 7, dadurch gekennzeichnet , daß er eine oder mehrere Armierungseinlagen enthält.

12. Formkörper aus einem Stoffgemisch nach den Ansprüchen 1 bis 7, dadurch gekennzeichnet , daß seine stoffliche Beschaffenheit homogen ist.

13. Verfahren zum Herstellen eines Platten-Formkörpers mit heterogenem Querschnitt, wobei aus einem Stoffgemisch gemäß den Ansprüchen 1 bis 7 nach Zugabe von Wasser in an sich bekannter Weise zunächst eine Weichpappe hergestellt und diese unter hohem Druck zu einer nach Aushärtung des Zements festen Platte gepreßt wird, d a d u r c h g e - k e n n z e i c h n e t , daß mehrere Weichpappen mit verschiedenen Mengenverhältnissen ihrer stofflichen Zusammensetzung übereinandergelegt und zu einem Plattenkörper gepreßt werden.

14. Verfahren zum Herstellen eines Platten-Formkörpers mit heterogenem Querschnitt, wobei aus einem Stoffgemisch gemäß den Ansprüchen 1 bis 7 nach Zugabe von Wasser in an sich bekannter Weise zunächst eine Weichpappe hergestellt wird und diese unter hohem Druck zu einer nach Aushärtung des Zements festen Platte gepreßt wird, d a d u r c h g e - k e n n z e i c h n e t , daß der Plattenkörper in seinem Stadium als nasse Weichpappe wenigstens einseitig mit einem erfindungsgemäßen Stoffgemisch in anderer Mengenzusammensetzung in Form einer fließfähigen Masse beschichtet und dann unter hohem Druck zu einem nach Aushärtung des Zements festen Plattenkörper gepreßt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 411 864 (TAC CONSTRUCTION MATERIALS LTD.) * Ansprüche 1,4 * | 1 | C 04 B 31/04 C 04 B 31/36 B 28 B 1/52 |
| Y | FR-A-2 317 250 (ASAHI GLASS COMPANY LTD.) * Anspruch 1; Beispiele 26-48 * | 1,2 | |
| Y | DE-B-2 918 974 (OY PARTEK AB) * Anspruch * | 1-3,5, 7 | |
| Y | GB-A- 539 530 (LEONARD MELLERSH-JACKSON) * Ansprüche 1-7 * | 1,9,13 | |

RECHERCHIERTE SACHGEBIETE (Int. Cl. ³)

C 04 B
B 28 B
E 04 C

Der vorliegende Recherchenbericht wurde für alle Patentansprüche erstellt.

| Recherchenort DEN HAAG | Abschlußdatum der Recherche 22-11-1983 | Prüfer STANGE R.L.H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82